(19) Europäisches Patentamt
European Patent Office
Office européen des brevets

(11) **EP 2 743 664 A2**

(12) **DEMANDE DE BREVET EUROPEEN**

(43) Date de publication:
**18.06.2014 Bulletin 2014/25**

(51) Int Cl.:
***G01L 3/14*** *(2006.01)*          ***B62M 6/50*** *(2010.01)*

(21) Numéro de dépôt: **13197178.0**

(22) Date de dépôt: **13.12.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **14.12.2012   FR 1262056**

(71) Demandeur: **COMMISSARIAT A L'ENERGIE ATOMIQUE ET AUX ENERGIES ALTERNATIVES**
**75015 Paris (FR)**

(72) Inventeur: **Boudet, Thierry**
**38130 Echirolles (FR)**

(74) Mandataire: **Thibon, Laurent**
**Cabinet Beaumont**
**1, rue Champollion**
**38000 Grenoble (FR)**

(54) **Dispositif de mesure de couple moteur dans un cycle**

(57)     L'invention concerne un dispositif de mesure du couple moteur et/ou de la puissance motrice développés sur un corps de moyeu (10) par un corps de roue libre (22) relié au corps de moyeu par un mécanisme de roue libre (28), le dispositif comprenant au moins un capteur de déformation et/ou de contrainte sur ou intégré à au moins un cliquet (30) dudit mécanisme et un circuit, relié au capteur, de détermination du couple moteur et/ou de la puissance motrice.

Fig 3

## Description

<u>Domaine</u>

La présente invention concerne un dispositif de mesure du couple moteur et/ou de la puissance motrice d'une roue de cycle, ainsi qu'un moyeu de roue de cycle équipé d'un tel dispositif.

<u>Exposé de l'art antérieur</u>

La mesure de la puissance motrice d'une roue de bicyclette présente un intérêt dans de nombreux cas, par exemple pour évaluer la performance d'un cycliste au cours d'un entraînement. La connaissance, à tout instant, de la puissance motrice fournie par le cycliste est susceptible d'aider les cyclistes à optimiser leur pratique. Elle leur permet notamment de mieux gérer leur effort et leur mouvement de pédalage, à l'entraînement ou pendant une course.

La puissance motrice fournie par le cycliste peut être obtenue en multipliant le couple moteur, transmis par le cycliste à la roue motrice, par la vitesse angulaire de cette roue.

La publication WO2011/066075 décrit un moyeu de roue arrière de bicyclette comprenant un dispositif de mesure du couple moteur exercé sur la roue motrice de la bicyclette.

<u>Résumé</u>

Ainsi, on prévoit ici un dispositif de mesure du couple moteur et/ou de la puissance motrice développés sur un corps de moyeu par un corps de roue libre relié au corps de moyeu par un mécanisme de roue libre, le dispositif comprenant au moins un capteur de déformation et/ou de contrainte sur ou intégré à au moins un cliquet dudit mécanisme et un circuit, relié au capteur, de détermination du couple moteur et/ou de la puissance motrice.

Selon un mode de réalisation, le capteur comprend au moins une jauge de déformation sur ledit cliquet.

Selon un mode de réalisation, au moins deux capteurs de déformation et/ou de contrainte sont disposés sur ou intégrés audit cliquet.

Selon un mode de réalisation, le capteur comprend au moins un microsystème électromécanique intégré au cliquet.

Selon un mode de réalisation, le mécanisme comprend plusieurs cliquets, le dispositif comprenant au moins un capteur de déformation et/ou de contrainte sur ou intégré à chaque cliquet.

Selon un mode de réalisation, le dispositif comprend un système d'alimentation électrique dudit circuit et/ou dudit capteur comprenant au moins un panneau solaire et un dispositif de stockage d'énergie.

Selon un mode de réalisation, le dispositif comprend, en outre, un capteur pour déterminer la vitesse angulaire du corps de moyeu.

Selon un mode de réalisation, le dispositif comprend un premier circuit de détermination du couple moteur et un deuxième circuit de détermination de la puissance motrice distinct du premier circuit.

Selon un mode de réalisation, le premier circuit transmet des données au deuxième circuit par une liaison sans fil.

Il est également prévu un moyeu de cycle comprenant un corps de roue libre, un corps de moyeu, un mécanisme de roue libre à cliquets, et un dispositif, tel que défini précédemment, de mesure du couple moteur et/ou de la puissance motrice développés sur le corps de moyeu par le corps de roue libre.

Selon un mode de réalisation, le capteur est situé dans un évidement prévu en surface du cliquet.

Il est également prévu une bicyclette équipée d'un dispositif de mesure tel que défini précédemment.

Il est également prévu un système d'asservissement d'un moteur d'assistance au pédalage dans un véhicule à pédales, comprenant :

un dispositif de mesure tel que défini précédemment ; et
des moyens pour faire varier la puissance du moteur à la hausse lorsque la puissance fournie par un utilisateur diminue et à la baisse lorsque la puissance fournie par l'utilisateur augmente.

Il est également prévu une bicyclette équipée d'un moteur d'assistance au pédalage et d'un système d'asservissement de ce moteur tel que défini précédemment.

<u>Brève description des dessins</u>

Ces objets, caractéristiques et avantages, ainsi que d'autres seront exposés en détail dans la description suivante de modes de réalisation particuliers faite à titre non limitatif en relation avec les figures jointes parmi lesquelles :

la figure 1 est une vue de côté d'un mode de réalisation d'un moyeu de roue motrice de bicyclette ;

la figure 2 est une vue en perspective éclatée du moyeu de la figure 1 ;

la figure 3 est une coupe de la figure 2 selon la ligne III-III ;

les figures 4 et 5 sont respectivement une vue en perspective et une coupe de l'un des cliquets du mécanisme de roue libre du moyeu de la figure 1 ;

la figure 6 représente, sous la forme d'un schémabloc, un mode de réalisation d'un dispositif de mesure de puissance ;

la figure 7 représente, sous la forme d'un schémabloc, un mode de réalisation d'un dispositif de mesure de couple ;

la figure 8 représente, de façon partielle et schématique, un mode de réalisation d'une partie du dispositif de la figure 7 ; et

la figure 9 représente, de façon partielle et schématique, une bicyclette motorisée équipée d'un dispositif de mesure de puissance du type décrit en relation avec la figure 6.

## Description détaillée

Par souci de clarté, de mêmes éléments ont été désignés par de mêmes références aux différentes figures et, de plus, les diverses figures ne sont pas tracées à l'échelle. En outre, seuls les éléments utiles à la compréhension de la présente description ont été représentés et sont décrits. En particulier, les éléments bien connus d'une bicyclette, notamment la structure du cadre de la bicyclette et la liaison entre les roues et le cadre ne sont pas décrits en détail. Dans la suite de la description, sauf indication contraire, les termes "sensiblement", "environ" et "de l'ordre de" signifient "à 10 % près".

Il est connu d'équiper le moyeu d'une roue motrice de cycle, notamment une bicyclette, une bicyclette motorisée, un tandem ou un tricycle, d'un dispositif de mesure du couple moteur fourni par le cycliste pour entraîner la roue motrice en rotation, en général la roue arrière du cycle, notamment pour déterminer la puissance motrice fournie par le cycliste.

Dans l'un des exemples de réalisation décrits dans le document WO2011/066075, le dispositif de mesure de couple comprend un corps d'épreuve équipé de jauges de déformation et disposé dans la cassette de pignons de la roue arrière. Un inconvénient de ce dispositif est qu'il requiert l'utilisation d'un corps d'épreuve spécifique. Ceci entraîne d'importantes modifications d'un moyeu existant pour installer le dispositif de mesure. En outre, un logement doit être prévu pour recevoir le corps d'épreuve du dispositif de mesure, ce qui conduit à augmenter la masse et l'encombrement du moyeu de la roue arrière. Ceci peut, en outre, dégrader l'aspect visuel du cycle.

Ainsi, un objet d'un mode de réalisation est de pallier tout ou partie des inconvénients des moyeux de roues de cycles décrits précédemment équipés de dispositifs de mesure de couple et/ou de puissance.

Un autre objet d'un mode de réalisation est que le dispositif de mesure du couple moteur et/ou de la puissance motrice d'une roue motrice de cycle modifie peu la structure des moyeux de roues motrices existants.

Un autre objet d'un mode de réalisation est que le dispositif de mesure a un encombrement réduit.

Un autre objet d'un mode de réalisation est que le dispositif de mesure peut facilement être adapté sur les moyeux de roues de cycle existants.

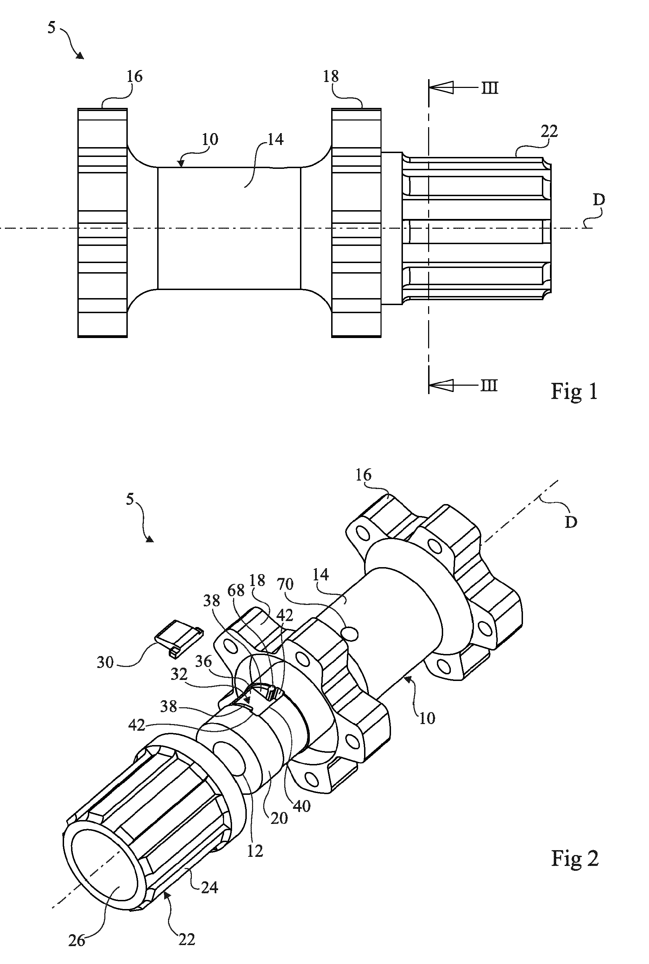

Les figures 1 à 3 représentent un mode de réalisation d'un moyeu 5 d'une roue motrice d'un cycle, par exemple la roue arrière d'une bicyclette.

Le moyeu 5 comprend un corps de moyeu 10 comportant une ouverture 12 cylindrique d'axe D. L'ouverture 12 est destinée à recevoir un arbre creux d'axe D, non représenté, fixé au cadre de la bicyclette. Le corps de moyeu 10 est monté libre en rotation autour de cet arbre. Le corps de moyeu 10 comprend une partie médiane cylindrique 14 et deux joues latérales ou renflements 16 et 18 de diamètre supérieur au diamètre de la partie médiane 14. Les joues 16, 18 sont prévues pour fournir des points d'ancrage aux rayons, non représentés, de la roue, ces rayons étant par ailleurs montés sur une jante.

A l'une de ses extrémités, le corps de moyeu 10 comprend un embout 20 destiné à recevoir un corps de roue libre 22. Le renflement 18 est situé entre la partie médiane 14 et l'embout 20. Le corps de roue libre 22 comprend une surface extérieure 24 cylindrique et cannelée qui est prévue pour recevoir un boîtier de pignons, non représenté, également appelé cassette de pignons. Le boîtier de pignons est en prise avec la chaîne de la bicyclette et est mis en rotation lorsque le cycliste actionne le pédalier de la bicyclette. Le corps de roue libre 22 est traversé par une ouverture 26 d'axe D. En fonctionnement, l'embout 20 est disposé dans l'ouverture 26 et des roulements, non représentés, sont interposés entre l'embout 20 et le corps de roue libre 22.

Un mécanisme de roue libre 28 unidirectionnelle assure la liaison entre le corps de moyeu 10 et le corps de roue libre 22. Le mécanisme de roue libre 28 comprend au moins un cliquet 30, généralement au moins deux cliquets. Selon le présent mode de réalisation, chaque cliquet 30 est disposé dans un logement 32 prévu dans l'embout 20. La surface interne de l'ouverture 26 de l'embout 20 comprend des crans ou dents 34 tout autour de l'embout en regard des cliquets 30. A titre de variante, chaque cliquet peut être disposé dans un logement prévu dans le corps de roue libre 22 et la surface externe de l'embout 20 peut comprendre des crans ou dents tout autour de l'embout en regard des cliquets 30.

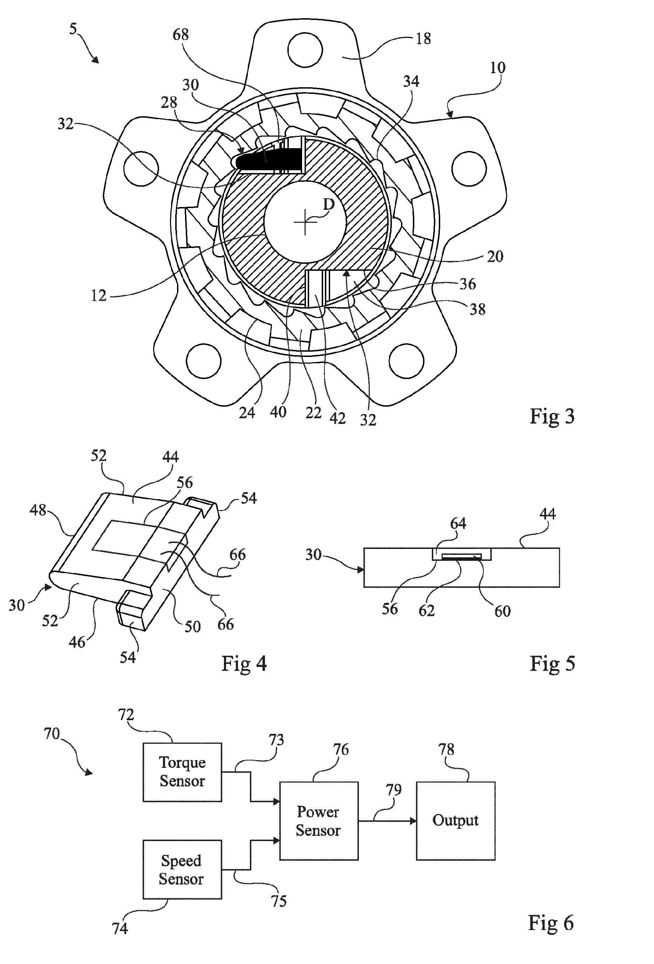

En figure 3, on a représenté deux logements 32 et on a représenté seulement un cliquet 30 dans le logement 32 situé en haut de la figure, sachant qu'un autre cliquet, non représenté, est monté en fonctionnement dans le logement 32 situé en bas de la figure. A titre d'exemple, chaque logement 32 comprend un fond plat 36, deux parois latérales planes 38, une paroi arrière plane 40 et deux enfoncements 42, chaque enfoncement 42 étant situé entre l'une des parois latérales 38 et la paroi arrière 40.

Les figures 4 et 5 représentent le cliquet 30 plus en détail. Le cliquet 30 comprend une paroi supérieure 44, une paroi inférieure plane 46, une paroi avant 48 arrondie reliant le bord avant de la paroi supérieure 44 au bord avant de la paroi inférieure 46, une paroi arrière 50 plane reliant le bord arrière de la paroi supérieure 44 au bord arrière de la paroi inférieure 46 et des parois latérales 52 reliant les bords latéraux de la paroi supérieure 44 aux bords latéraux de la paroi inférieure 46. Le cliquet 30 comprend, en outre, des ergots 54 se projetant de part et d'autre du cliquet 30 depuis les parois latérales 52.

Chaque cliquet 30 est monté libre en pivotement dans le logement 32 autour d'un axe parallèle à l'axe D s'étendant sensiblement au niveau des ergots 54. Les cliquets 30 sont asservis élastiquement pour coopérer avec les crans ou dents 34 prévus sur la surface interne de l'ouverture 26 de l'embout 20. Chaque cliquet 30 est maintenu en permanence en appui contre les dents 34 par un moyen de rappel élastique non représenté, par exemple un ressort.

A titre d'exemple, l'épaisseur maximale du cliquet 30 est d'environ 3 mm, la distance entre la paroi avant 48 et la paroi arrière 50 est d'environ 10 mm et la distance entre les parois latérales 52 est d'environ 10 mm.

Les cliquets 30 permettent de solidariser sélectivement les corps 10 et 22 lorsque le cycliste exerce un effort pour entraîner en rotation le corps de roue libre 22 au moyen d'un pédalier relié au boîtier de pignons par une chaîne. Le corps de roue libre 22 entraîne alors en rotation le corps de moyeu 10. Lorsque le cycliste n'exerce pas d'effort d'entraînement en rotation du corps de roue libre 22, les cliquets 30 ne s'opposent pas à ce que la rotation du corps de moyeu 10 continue. La roue motrice de la bicyclette peut alors tourner sans que le pédalier soit entraîné en rotation.

Dans le présent mode de réalisation, le cliquet 30 comprend un évidement 56 prévu sur la paroi supérieure 44. A titre d'exemple, l'évidement 56 a une profondeur maximale inférieure ou égale à 0,8 mm. Un capteur 60 d'effort et/ou de déformation est disposé dans l'évidement 56. A titre d'exemple, le capteur 60 est collé au fond de l'évidement 56 par une couche de colle 62, notamment une colle cyanoacrylate. Le reste de l'évidement 56 peut être comblé par un matériau de remplissage 64, par exemple une résine époxy. Le capteur 60 est relié par des conducteurs électriques 66, par exemple des fils électriques, à un circuit de traitement, non représenté. Une ouverture 68, qui débouche dans l'ouverture centrale 12 du corps de moyeu, est prévue le long de la paroi 38 du logement 32. L'ouverture 68 permet le passage des fils 66 dans l'ouverture centrale 12. Une ouverture 70, qui débouche dans l'ouverture centrale 12 du corps de moyeu, est prévue dans la partie médiane 14 du corps de moyeu 10 et permet de faire passer des fils depuis l'ouverture centrale 12 vers l'extérieur du corps de moyeu 10.

A titre de variante, plusieurs capteurs d'effort/de déformation sont prévus sur la paroi supérieure 44 du cliquet 30. Selon une autre variante, un capteur d'effort/de déformation est également prévu sur la paroi inférieure 46 du cliquet 30 et/ou sur les parois latérales 52. A titre de variante, au moins un capteur d'effort/de déformation est prévu pour au moins deux cliquets, de préférence pour chaque cliquet 30 du mécanisme de roue libre 28.

Selon un mode de réalisation, le capteur 60 comprend une jauge de déformation. La jauge de déformation est adaptée à traduire la déformation du cliquet en variation de résistance électrique. De préférence, la jauge de déformation est disposée de façon à détecter une déformation du cliquet 30 selon une direction longitudinale, c'est-à-dire sensiblement perpendiculaire à la paroi arrière 50. A titre de variante, plusieurs jauges de déformation sont disposées sur la paroi 44 selon des orientations différentes.

Selon un mode de réalisation, le capteur est réalisé en partie ou en totalité de façon intégrée au cliquet 30. Il peut alors comprendre un microsystème électromécanique ou MEMS (acronyme anglais pour Microelectromechanical System).

A titre d'exemple, le cliquet 30 est réalisé en un matériau tel qu'un alliage d'aluminium ou de l'acier. Ces matériaux présentent une limite d'élasticité élevée. Naturellement tout autre matériau approprié convient.

La figure 6 représente, sous la forme d'un schémabloc, un mode de réalisation d'un système 70 de mesure de la puissance motrice fournie par le cycliste.

Le système 70 comprend :

- un circuit 72 (Torque Sensor) de mesure du couple moteur $C_M$ d'entraînement de la roue motrice par le cycliste ;
- un circuit 74 (Speed Sensor) de mesure de la vitesse de rotation $\omega$ des roues de la bicyclette ;
- un circuit 76 (Power Sensor) de détermination de la puissance motrice $P_M$ fournie par le cycliste, relié au circuit 72 par une liaison 73 et au circuit 74 par une liaison 75 ; et
- un système 78 (Output) de stockage de données et/ou d'affichage de données relié au circuit 76 par une liaison 79.

Le circuit 72 détermine le couple $C_M$ moteur à partir de la force F, exercée par le corps de roue libre 22 sur le cliquet 30 lorsque le corps de roue libre 22 entraîne en rotation le corps de moyeu 10 et obtenue à partir de la mesure fournie par le capteur 60. Le couple $C_M$ est défini par la relation (1) suivante :

$$C_M = 2 \text{ x } A \text{ x } F \text{ x } L \qquad (1)$$

où L est la distance qui sépare le point d'application de la force F de l'axe D et A est un facteur correctif, qui peut varier de 0 à 1. Le facteur A traduit le fait que la direction de la force F mesurée par le capteur 60 peut ne pas être exactement perpendiculaire à la droite perpendiculaire à l'axe D et passant sensiblement par le point d'application de la force F, c'est-à-dire sensiblement au niveau de la paroi avant 48 du cliquet 30.

Connaissant le couple moteur $C_M$, on peut calculer la puissance motrice $P_M$ développée par le cycliste et définie par la relation (2) suivante :

$$P_M = C_M \text{ x } \omega \qquad (2)$$

Selon un mode de réalisation, le capteur 60 est adapté à fournir un signal représentatif de la déformation $\varepsilon$ du cliquet 30. La force F est alors obtenue par la relation (3) suivante :

$$F = S \text{ x } E \text{ x } \varepsilon \qquad (3)$$

où S est la section droite du cliquet 30 au niveau du capteur 60 et E est le module d'Young du matériau constituant le cliquet 30.

Lorsque le capteur 60 comprend une jauge de déformation, la variation relative de la résistance de la jauge de déformation 60 est proportionnelle, au facteur de jauge près, à la variation de longueur relative de la jauge, et donc également à la variation de longueur relative de la partie du cliquet qui supporte la jauge de déformation. De manière avantageuse, on choisit une jauge 60 qui possède un facteur de jauge élevé, pour obtenir un signal de plus grande amplitude et améliorer ainsi la sensibilité du capteur 60.

Le capteur de vitesse angulaire 74 détecte la vitesse de rotation $\omega$ de la roue arrière ou avant de la bicyclette comme il est connu dans la technique. A titre d'exemple, le capteur de vitesse angulaire 74 peut être une cellule de type Reed adaptée à mesurer la vitesse angulaire du moyeu 5. La cellule Reed détecte chaque tour du moyeu autour de l'arbre sur lequel le moyeu est monté, au moyen d'un aimant disposé dans une entaille ménagée dans l'arbre, ce qui permet d'obtenir une mesure de la vitesse angulaire de la roue.

Le système 78 peut comprendre un écran d'affichage et/ou une mémoire pour le stockage de données. Le circuit 76 est alors adapté à afficher la puissance motrice $P_M$ déterminée sur l'écran d'affichage et/ou à stocker dans la mémoire la valeur de puissance motrice $P_M$ déterminée.

Il est entendu que le circuit 76 peut déterminer des données supplémentaires, en plus de la puissance motrice $P_M$, à partir du couple moteur $C_M$ et/ou de la vitesse de rotation $\omega$. A titre d'exemple, le circuit 76 peut déterminer la vitesse de la bicyclette, la distance parcourue et le temps de trajet ainsi que les valeurs moyennes, telles que la puissance moyenne, la vitesse moyenne, etc.

Selon un autre mode de réalisation, les circuits 72 et 76 sont au moins en partie confondus.

La liaison 73, la liaison 75 et/ou la liaison 79 peuvent être des liaisons filaires ou des liaisons sans fil. A titre d'exemple, la transmission de données sur les liaisons sans fil met en oeuvre des procédés d'échange de données sans fil. Il peut s'agir du procédé connu sous l'appellation ANT ou de procédés basés sur la norme IEEE 802.15.4, notamment le protocole de communication connu sous l'appellation Zigbee, ou sur la norme IEEE 802.15.1, notamment le protocole de communication connu sous l'appellation Bluetooth. A titre d'exemple, les liaisons filaires peuvent comprendre un collecteur tournant dans le cas où des signaux doivent être transmis entre deux pièces mobiles en rotation l'une par rapport à l'autre.

Le circuit 72 de mesure de couple moteur, le capteur de vitesse angulaire 74, le circuit 76 de détermination de la puissance motrice et le système 78 peuvent être disposés à des emplacements différents sur la bicyclette. A titre d'exemple, le circuit 72 de mesure de couple peut être situé au niveau du moyeu 5 de la roue arrière, le circuit 76 de détermination de la puissance motrice et le système 78 d'affichage de données peuvent être situés sur le guidon de la bicyclette et le capteur de vitesse 74 peut être situé sur les haubans du cycle, pour la mesure de la vitesse de rotation de la roue arrière, ou sur la fourche du cycle, pour la mesure de la vitesse de rotation de la roue avant.

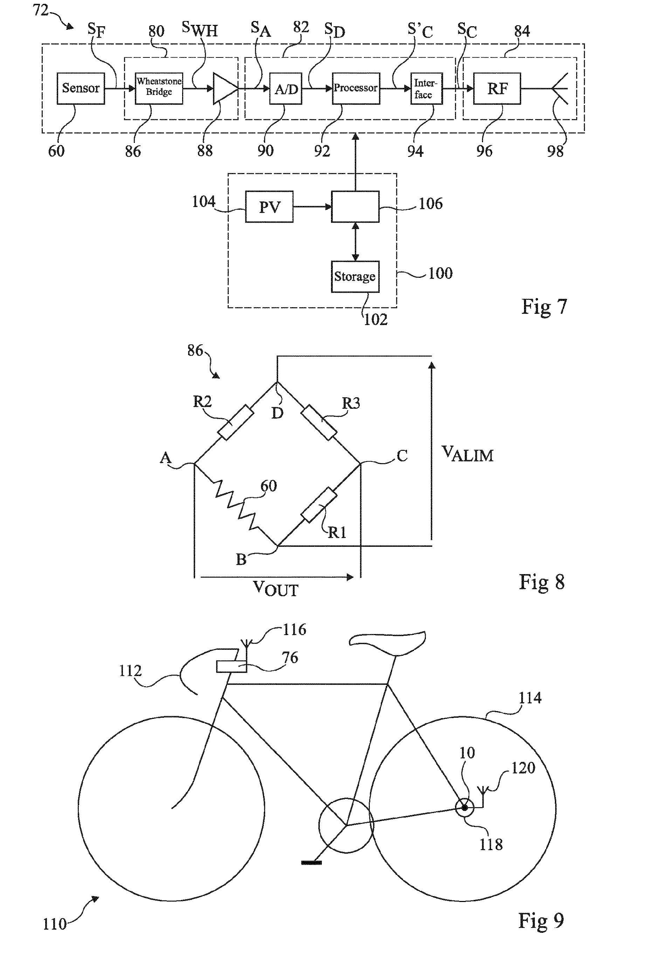

La figure 7 représente, de façon partielle et schématique, un mode de réalisation du circuit 72 de mesure du couple moteur $C_M$, dans le cas où la liaison 73 est une liaison sans fil.

Le circuit de mesure 72 comprend :

- le capteur 60 (Sensor) qui fournit un signal $S_F$ ;
- un circuit 80 de mise en forme du signal $S_F$ fournissant un signal analogique SA ;
- un circuit de traitement 82 recevant le signal analogique SA et fournissant un signal $S_C$ représentatif du couple moteur $C_M$ fourni par le cycliste pour entraîner en rotation la roue arrière ; et
- un circuit de transmission 84 adapté à mettre en forme le signal $S_C$ pour sa transmission par une liaison sans fil.

Dans le cas où le capteur 60 est une jauge de déformation, le circuit de mise en forme 80 comprend un pont de Wheatstone 86 (Wheatstone Bridge) relié à la jauge de déformation 60. Le pont de Wheatstone 86 fournit un signal $S_{WH}$ à un amplificateur analogique 88 qui amplifie le signal $S_{WH}$ mesuré par le pont 86. L'amplificateur 88 fournit le signal analogique SA au circuit de traitement 82.

Selon une variante, le capteur 60 est un capteur de force adapté à mesurer la force appliquée par le corps de roue libre 22 sur le cliquet 30 lorsque le corps de roue libre 22 est entraîné en rotation par le cycliste. Dans ce cas, si le signal fourni par le capteur 60 est directement représentatif de la force appliquée au cliquet 30, le pont de Wheatstone 86 peut ne pas être présent.

Le circuit de traitement 82 comprend un convertisseur analogique/numérique 90 (A/D) qui convertit le signal analogique SA en un signal numérique $S_D$. Le circuit de traitement 82 comprend, en outre, un module 92 (Processor) recevant le signal $S_D$ et fournissant un signal numérique $S'_C$ représentatif du couple moteur $C_M$. Le circuit de traitement 82 comprend, par exemple, un microcontrôleur exécutant des instructions logicielles, et une mémoire. Il peut s'agir également d'un circuit électronique configuré pour déterminer le couple moteur $C_M$.

Le circuit de traitement 82 comprend, en outre, un module 94 (Interface) de mise en forme du signal $S'_C$ pour le transmettre au circuit de transmission 84. A titre d'exemple, le module 94 est adapté à mettre en forme le signal numérique $S'_C$ pour une transmission sur un bus de données série synchrone ou SPI (signal anglais pour Serial Peripheral Interface).

Le circuit de transmission 84 peut comprendre un émetteur radiofréquence 96 (RF) relié à une antenne 98. A titre d'exemple, les valeurs du signal $S_C$ fournies par le circuit de traitement 82 peuvent être transmises par l'intermédiaire de l'émetteur RF 96 à l'antenne 98 pour une transmission radiofréquence à 2,4 GHz selon le protocole de communication sans fil ANT.

L'alimentation du circuit 72 de mesure de couple est réalisée par un circuit d'alimentation 100. A titre d'exemple, le circuit d'alimentation 100 comprend un module 102 (Storage) de stockage d'énergie, par exemple une batterie ou un condensateur, des panneaux photovoltaïques 104 (PV) et un module de gestion d'énergie 106 (Energy Unit) relié au module 102 de stockage d'énergie et aux panneaux photovoltaïques 104. Le module 106 est adapté à fournir une tension sensiblement constante au circuit 72 à partir de l'énergie fournie par le moyen de stockage 102 et/ou des panneaux photovoltaïques 104. Le module de gestion d'énergie 106 est, en outre, adapté à recharger le moyen de stockage 102 à partir de l'énergie fournie par les panneaux photovoltaïques 104. Les panneaux photovoltaïques 104 sont, par exemple, placés au niveau de la jante de la roue arrière et/ou des rayons de la roue arrière. A titre de variante, le circuit d'alimentation 100 peut, en outre, comprendre une autre source d'énergie, en complément ou en remplacement des panneaux photovoltaïques 104. Il s'agit, par exemple, d'un système de récupération d'énergie associé à la roue arrière.

A titre d'exemple, les circuits 80, 82, 84, 102 et 106 peuvent être disposés dans un boîtier situé dans ou sur la partie médiane 14 du corps de moyeu 10.

Lorsque les circuits 72 et 76 sont confondus, le circuit de traitement 92 peut, en outre, recevoir du capteur de vitesse angulaire 74 un signal représentatif de la vitesse angulaire des roues et peut, en plus du couple moteur $C_M$, déterminer la puissance motrice $P_M$.

Lorsque le cycliste pédale, dans un mouvement moteur, les cliquets solidarisent en rotation le corps de roue libre 22 avec le corps de moyeu 10, et le corps de moyeu 10 est entraîné en rotation autour de l'axe D. Le cliquet 30 se déforme et fait varier la résistance de la jauge de déformation 60, ce qui permet au circuit de traitement 92 de calculer la valeur du couple moteur $C_M$, sur la base du signal fourni par le pont de Wheatstone 86. Le cliquet 30 travaille essentiellement en compression lorsque le corps de roue libre 22 entraîne le corps de moyeu 10 en rotation.

De préférence, en l'absence de couple transmis par la chaîne de la bicyclette, le capteur 60 n'est pas sollicité. C'est seulement lorsqu'un couple moteur est transmis que le capteur 60 est sollicité en compression. De manière avantageuse, lorsque la roue arrière est en roue libre, l'ensemble des éléments du dispositif 72 sont réglés pour annuler le déséquilibrage du pont de Wheatstone en l'absence de sollicitation et pour annuler également les déséquilibres de toute la chaîne d'amplification et de traitement du signal. A titre d'exemple, le circuit de traitement 92 détecte automatiquement les phases de roue libre en étudiant les variations instantanées du couple. En effet, au cours d'un cycle de pédalage, le couple transmis par le cycliste passe par deux maximums, correspondant aux positions où les manivelles droite et gauche du pédalier font sensiblement un angle de 60° avec la verticale, et deux minimums, lorsque les manivelles sont en position basse. Le circuit de traitement 92 est adapté à détecter ces variations répétées du couple moteur $C_M$. Lorsqu'il n'y a plus de variation, le circuit de traitement 92 déduit que la bicyclette est en roue libre. Le circuit de traitement 72 peut alors commander l'ajustement de paramètres de fonctionnement des éléments du dispositif 72 (gain d'amplification variable, résistances variables, etc.) pour réaliser le réglage du zéro du dispositif 72.

La figure 8 représente un mode de réalisation du pont de Wheatstone 86. Le pont de Wheatstone 86 comprend quatre noeuds A, B, C et D. La jauge de déformation 60 est connectée entre les noeuds A et B. Une résistance fixe R1, par exemple de 120 ohms, est connectée entre les noeuds B et C. Des résistances ajustables R2 et R3 sont connectées respectivement entre les noeuds A et D et entre les noeuds C et D. Le signal $S_{WH}$ fourni par le pont de Wheatstone correspond à la tension $V_{OUT}$ entre les noeuds A et C. La tension $V_{ALIM}$ est une tension constante appliquée entre les noeuds D et B.

A titre de variante, lorsque le cliquet 30 est muni de deux jauges de déformation, la jauge de déformation supplémentaire peut être connectée au pont de Wheatstone à la place de la résistance R2. Selon une autre variante, lorsque le cliquet 30 est muni de quatre jauges de déformation, celles-ci peuvent être montées en pont de Wheatstone complet. Comme les jauges sont fixées sur le même cliquet, ceci rend le signal délivré par les jauges insensible aux variations de température, car le pont de Wheatstone est ainsi auto-compensé.

Afin de limiter la consommation électrique, il est préférable d'alimenter la jauge de déformation 60 de manière pulsée en ne l'alimentant que quelques dizaines de microsecondes à une fréquence d'échantillonnage supérieure à 40 Hz.

Le dispositif 70 de mesure de couple présente l'avantage d'être relativement compact et léger et mesure efficacement le couple $C_M$ d'entraînement de la roue.

La figure 9 représente de façon schématique une bicyclette 110 équipée d'un dispositif de mesure de puissance du type décrit en relation avec la figure 6. Dans cet exemple, le circuit 76 de détermination de la puissance motrice $P_M$ et le système 78 d'affichage et/ou de mémorisation sont disposés au niveau du guidon 112. Ils sont, par exemple, intégrés à un boîtier d'affichage d'un compteur de vitesse. Le circuit 74 de détermination du couple moteur $C_M$ est disposé au niveau du moyeu 10 de la roue arrière 114 de la bicyclette 110. On a représenté, de façon schématique, une antenne de communication sans fil 116 du circuit 78.

Selon un mode de réalisation, la bicyclette 110 comprend en outre, du côté de sa roue arrière 114, un moteur d'assistance 118 au pédalage, par exemple un moteur électrique. Dans ce mode de réalisation, le dispositif de mesure de puissance peut être utilisé pour optimiser l'utilisation du moteur d'assistance. Une antenne 120 prévue du côté du moteur 118 peut permettre d'établir une communication entre le moteur et le circuit 76 du dispositif de mesure de puissance. La mesure de la puissance fournie par le cycliste peut être utilisée pour commander des variations de vitesse du moteur 118, à la hausse lorsque la puissance fournie par le cycliste diminue, et à la baisse lorsque la puissance fournie par le cycliste augmente.

Des modes de réalisation particuliers ont été décrits. On notera que l'homme de l'art pourra combiner divers éléments de ces divers modes de réalisation et variantes sans faire preuve d'activité inventive.

**Revendications**

1. Dispositif (70 ; 72) de mesure du couple moteur et/ou de la puissance motrice développés sur un corps de moyeu (10) par un corps de roue libre (22) relié au corps de moyeu par un mécanisme de roue libre (28), le dispositif comprenant au moins un capteur (60) de déformation et/ou de contrainte sur ou intégré à au moins un cliquet (30) dudit mécanisme et un circuit (72), relié au capteur, de détermination du couple moteur et/ou de la puissance motrice.

2. Dispositif selon la revendication 1, dans lequel le capteur (60) comprend au moins une jauge de déformation sur ledit cliquet (30).

3. Dispositif selon la revendication 1 ou 2, dans lequel au moins deux capteurs (60) de déformation et/ou de contrainte sont disposés sur ou intégrés audit cliquet (30).

4. Dispositif selon l'une quelconque des revendications 1 à 3, dans lequel le capteur (60) comprend au moins un microsystème électromécanique intégré au cliquet (30).

5. Dispositif selon l'une quelconque des revendications 1 à 4, dans lequel le mécanisme (28) comprend plusieurs cliquets (30), le dispositif comprenant au moins un capteur (60) de déformation et/ou de contrainte sur ou intégré à chaque cliquet (30).

6. Dispositif selon l'une quelconque des revendications 1 à 5, comprenant un système (100) d'alimentation électrique dudit circuit et/ou dudit capteur comprenant au moins un panneau solaire (104) et un dispositif de stockage d'énergie (102).

7. Dispositif selon l'une quelconque des revendications 1 à 6, comprenant, en outre, un capteur (74) pour déterminer la vitesse angulaire du corps de moyeu (10).

8. Dispositif selon l'une quelconque des revendications 1 à 7, comprenant un premier circuit (72) de détermination du couple moteur et un deuxième circuit (76) de détermination de la puissance motrice distinct du premier circuit.

9. Dispositif selon la revendication 8, dans lequel le premier circuit (72) transmet des données au deuxième circuit (76) par une liaison (73) sans fil.

10. Moyeu (5) de cycle comprenant un corps de roue libre (22), un corps de moyeu (10), un mécanisme de roue libre (28) à cliquets (30), et un dispositif de mesure du couple moteur et/ou de la puissance motrice développés sur le corps de moyeu par le corps de roue libre selon l'une quelconque des revendications 1 à 9.

11. Moyeu selon la revendication 10, dans lequel le capteur (30) est situé dans un évidement (56) prévu en surface du cliquet (30).

12. Bicyclette (110) équipée d'un dispositif (70 ; 72) de mesure selon l'une quelconque des revendications 1 à 9.

13. Système d'asservissement d'un moteur (118) d'assistance au pédalage dans un véhicule à pédales (110), comprenant :

   un dispositif de mesure (70 ; 72) selon l'une quelconque des revendications 1 à 9 ; et
   des moyens pour faire varier la puissance du moteur à la hausse lorsque la puissance fournie par un utilisateur diminue et à la baisse lorsque la puissance fournie par l'utilisateur augmente.

14. Bicyclette (110) équipée d'un moteur (118) d'assistance au pédalage et d'un système d'asservissement de ce moteur selon la revendication 13.

Fig 1

Fig 2

Fig 3

Fig 4

Fig 5

Fig 6

Fig 7

Fig 8

Fig 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011066075 A